# FASCICULE DE BREVET EUROPEEN

(11) **EP 2 578 332 B1**
(45) Date de publication et mention de la délivrance du brevet: **04.06.2014**
(21) Numéro de dépôt: 12306200.2
(22) Date de dépôt: 02.10.2012
(51) Int. Cl.: B21J 15/50, B23B 47/28, B25B 27/06

(54) **Procédé de destruction d'une fixation aveugle et dispositif pour sa mise en oeuvre**
Verfahren zur Zerstörung einer Blindbefestigung, und Vorrichtung zur Umsetzung dieses Verfahrens
Method for destroying a blind fastener and device for implementing same

(30) Priorité: 04.10.2011 FR 1158940
(43) Date de publication de la demande: 10.04.2013
(73) Titulaire: Airbus Opérations SAS, 31060 Toulouse (FR)
(72) Inventeur: Chelin, Frédéric, 32430 ENCAUSSE (FR); Lalane, Jacques, 31650 SAINT ORENS DE GAMEVILLE (FR)
(74) Mandataire: Fantin, Laurent

(56) Documents cités:
- EP-A1- 1 810 790
- DE-U1- 20 010 941
- DE-U1-202008 007 342
- US-A1- 2011 000 064

## Description

La présente invention se rapporte à un procédé de destruction d'une fixation aveugle tel qu'un rivet de type aveugle ainsi qu'à un dispositif pour sa mise en oeuvre, voir par exemple US-A-2011/0000864 sur lequel se base le préambule des revendications 1 et 6.

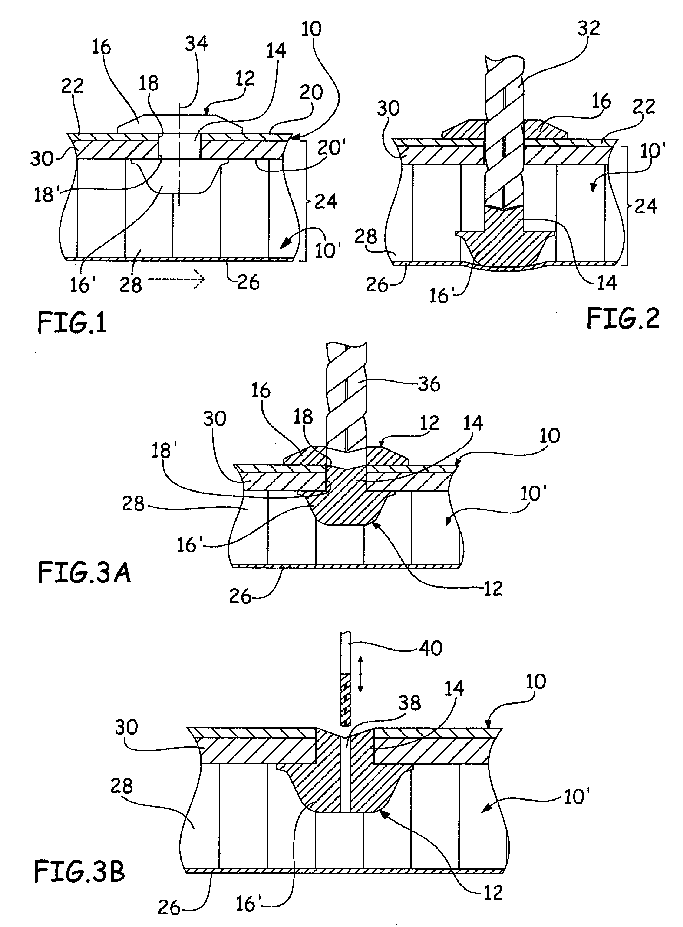

Comme illustré sur la figure 1, deux éléments 10, 10' plaqués l'un contre l'autre sont assemblés grâce à au moins une fixation de type aveugle sous la forme d'un rivet 12 comportant un corps cylindrique 14 avec à chaque extrémité deux têtes 16, 16'. Pour chaque rivet, le premier élément à assembler 10 comprend un trou 18 disposé dans le prolongement d'un trou 18' ménagé dans le second élément à assembler 10' dans lesquels se loge le corps cylindrique 14 du rivet. En complément, le premier élément à assembler 10 comprend une surface d'appui 20 contre laquelle peut prendre appui l'une des têtes 16 du rivet et le second élément à assembler 10' comprend une surface d'appui 20' contre laquelle peut prendre appui l'autre tête 16' du rivet.

Lors de sa mise en place, le rivet est déformé notamment au niveau de ses têtes 16 et 16' et le corps cylindrique 14 tend à s'expanser si bien qu'on obtient un ajustement serré entre ledit corps cylindrique 14 et les trous 18, 18'. Ainsi, après la mise en place du rivet, les éléments 10 et 10' sont maintenus grâce aux têtes 16, 16' du rivet mais également grâce à l'ajustement serré entre le corps cylindrique 14 du rivet et les trous 18, 18'.

Comme illustré dans le document EP-0 898.063, des fixations aveugles peuvent être utilisées pour assurer la liaison entre une aile d'une bride 22 et un panneau pour le traitement acoustique 24 prévu au niveau d'une entrée d'air d'une nacelle d'un aéronef. De manière connue, un panneau pour le traitement acoustique 24 comprend une couche acoustiquement résistive 26 en contact avec les flux d'air aérodynamiques, une structure alvéolaire 28 et une couche réflectrice 30.

Dans cette application, le rivet 12 assure la liaison entre la couche réflectrice 30 et une bride 22 et l'une des têtes 16' du rivet est noyée dans la structure alvéolaire 28.

Lorsqu'on souhaite désolidariser le panneau 24 et la bride 22, il est nécessaire de détruire le rivet 12. A cet effet, on utilise une perceuse équipée d'un foret 32 dont le diamètre est sensiblement égal à celui des trous 18, 18' afin de détruire partiellement l'une des têtes 16 pour la séparer du corps 14 du rivet.

Lorsque le foret a atteint une certaine profondeur, le restant de la tête 16 sous forme d'un anneau se détache du corps 14. Il est nécessaire de continuer de percer et d'exercer un effort à l'encontre du restant du rivet pour pouvoir le désolidariser compte tenu de l'ajustement serré entre le corps 14 du rivet et les trous 18, 18'.

A partir d'une certaine profondeur, les efforts exercés par l'opérateur provoquent la rupture de manière soudaine de la liaison entre le corps du rivet et les trous des pièces à assembler.

Cette opération étant réalisée successivement sur plusieurs rivets, il peut arriver que l'opérateur soit emporté par son élan et ne retienne pas la perceuse si bien que le rivet 12 peut traverser la structure alvéolaire et venir endommager la couche acoustiquement résistive en la déformant, comme illustré sur la figure 2. Si la déformation est trop accentuée, il est nécessaire alors de réparer le panneau 24, voire de le changer.

Par conséquent, pour limiter les risques d'endommagement du panneau, l'opération de démontage est réalisée avec beaucoup de minutie ce qui tend à augmenter le temps d'intervention et d'immobilisation de l'aéronef.

Aussi, la présente invention vise à pallier les inconvénients de l'art antérieur en proposant un procédé de destruction d'une fixation aveugle qui limite les risques d'endommagement des éléments liés par ladite fixation.

A cet effet, l'invention a pour objet un procédé de destruction d'une fixation aveugle assurant la liaison entre au moins deux pièces, ladite fixation aveugle comprenant un corps se logeant dans des trous prévus dans les pièces assemblées avec à chaque extrémité deux têtes avec des sections supérieures à celles des trous, ledit procédé comprenant l'étape consistant à retirer la tête accessible de la fixation et étant **caractérisé en ce qu'il** consiste en suivant à réaliser un trou traversant la fixation, à mettre en place dans le trou des moyens pour retenir le restant de la fixation comportant un corps longiligne dont le diamètre est inférieur ou égal à celui du trou avec à une première extrémité une tête expansible, lesdits moyens pour retenir le restant de la fixation étant immobilisés ou ayant un mouvement limité par rapport aux pièces assemblées et à chasser des trous le restant de la fixation.

D'autres caractéristiques et avantages ressortiront de la description qui va suivre de l'invention, description donnée à titre d'exemple uniquement, en regard des dessins annexés sur lesquels :
- la figure 1 est une vue en coupe d'une fixation aveugle,
- la figure 2 est une coupe illustrant le mode opératoire de destruction de ladite fixation selon l'art antérieur,
- les figures 3A et 3B sont des coupes illustrant les premières étapes du procédé de destruction d'une fixation aveugle selon l'invention,
- les figures 4A et 4B sont des coupes illustrant une première variante d'un dispositif pour mettre en oeuvre les étapes suivantes du procédé de destruction d'une fixation aveugle selon l'invention,
- les figures 5A et 5B sont des coupes illustrant une autre variante d'un dispositif pour mettre en oeuvre les mêmes étapes que le dispositif illustré sur les figures 4A et 4B,
- la figure 6A est une coupe illustrant une autre variante d'un dispositif pour mettre en oeuvre les mêmes étapes que le dispositif illustré sur les figures 4A et 4B, et
- la figure 6B est une vue de dessus du dispositif de la figure 6A.

L'invention est décrite appliquée à une fixation aveugle 12 assurant une liaison entre au moins deux éléments 10 et 10', par exemple une aile d'une bride et un panneau pour le traitement acoustique, comme illustré sur la figure 1.

Selon l'invention, on entend par fixation aveugle 12 tout élément de liaison comprenant un corps 14 se logeant dans des trous 18, 18' prévus dans les pièces assemblées 10 et 10' avec à chaque extrémité deux têtes 16, 16' avec des sections supérieures à celles des trous 18, 18' permettant de maintenir les pièces 10, 10' assemblées.

La fixation est dite aveugle dans la mesure où l'une de ses têtes 16' n'est pas accessible.

Pour la suite de la description, on entend par direction longitudinale, la direction parallèle à l'axe 34 du corps 14 de la fixation.

Sur les différentes figures, la fixation aveugle 12 assure la jonction entre un élément et un panneau pour le traitement acoustique 24 comprenant une couche acoustiquement résistive 26 en contact avec les flux d'air aérodynamiques, une structure alvéolaire 28 et une couche réflectrice 30. Dans cette application, l'une des têtes 16' de la fixation aveugle 12 est disposée au niveau de la structure alvéolaire 28 et plaquée contre la couche réflectrice 30.

Bien entendu, l'invention n'est pas limitée à cette application et peut être mise en oeuvre, pour détruire une fixation avec un ajustement serré entre le corps 14 et les trous 18, 18', lorsqu'il est nécessaire de retenir le restant de la fixation pour éviter qu'il n'endommage un élément environnant comme par exemple une couche acoustiquement résistive d'un panneau pour le traitement acoustique.

La première étape de l'invention consiste à retirer la tête 16 accessible de la fixation, notamment en la séparant du reste de la fixation, comme illustré sur la figure 3A. A cet effet, comme pour l'art antérieur, on peut utiliser un foret 36 dont le diamètre est sensiblement égal à celui du corps 14 de la fixation. Contrairement à l'art antérieur, le foret n'est utilisé que pour séparer la tête du reste de la fixation et non pas pour chasser le restant du rivet des trous. Par conséquent, dès que la tête 16 est séparée du corps 14, l'opérateur cesse l'usinage.

En variante, on pourrait utiliser un outil dont le diamètre est sensiblement égal à celui de la tête 16 afin de la détruire complètement par usinage.

Après le retrait de la tête 16 accessible, on réalise un trou 38 traversant la fixation, comme illustré sur la figure 3B. Avantageusement, le trou 38 est coaxial à l'axe 34 de la fixation. Ce trou 38 a un diamètre inférieur ou égal à la moitié du diamètre du corps 14 de la fixation. A titre d'exemple, ce trou a un diamètre de l'ordre de 4 mm pour une fixation de 8 mm.

Selon un mode de réalisation, on utilise un second foret 40 pour réaliser le trou 38 dont le diamètre est inférieur au premier foret 36.

Dans tous les cas, le diamètre du trou 38 est tel que les efforts exercés par le foret 40 sur le restant de la fixation sont inférieurs à ceux nécessaires pour chasser le restant de la fixation des trous 18, 18'.

En suivant, on met en place dans le trou 38 des moyens 42 pour retenir le restant de la fixation.

Ces moyens 42 comprennent un corps 44 longiligne dont le diamètre est inférieur ou égal à celui du trou 38 avec à une première extrémité une tête expansible 46 et à l'autre extrémité une tête de maintien 48.

La tête expansible 46 peut occuper deux états, un premier état dit expansé dans lequel elle a une section ne lui permettant pas de passer à travers le trou 38 et un second état dit rétracté dans lequel elle a une section lui permettant de passer à travers le trou 38.

Selon un mode de réalisation, les moyens 42 pour retenir le reste de la fixation se présentent sous la forme d'une épingle utilisée notamment pour le pré-positionnement de pièces lors de leur assemblage. Ainsi, ils comprennent une aiguille creuse 50 avec un conduit longitudinal 52, une collerette 54 à une première extrémité qui assure la fonction de tête de maintien 48 et au moins une fente longitudinale à l'autre extrémité qui sépare l'aiguille en deux demi cylindres pourvus chacun d'une forme en crochet 56 assurant la fonction de tête expansible 46. En complément, les moyens 42 comprennent une tige 58 susceptible d'être insérée dans l'aiguille creuse 50, le conduit 52 ayant un diamètre qui se réduit au niveau des formes en crochet 56 de sorte que lorsque la tige 58 n'est pas insérée dans l'aiguille 50 au droit des formes en crochet 56, ces dernières sont resserrées et la tête expansible 46 est à l'état rétracté alors que lorsque la tige 58 est insérée dans l'aiguille au droit des formes en crochet 56, ces dernières sont écartées et la tête expansible 46 est à l'état expansé.

L'aiguille 50 est réalisée en un matériau élastique ou à mémoire de forme pour que la tête expansible 46 revienne à l'état rétracté lorsque la tige 58 est retirée du conduit 52.

Selon l'invention, les moyens 42 pour retenir le restant de la fixation sont immobilisés ou ont un mouvement limité par rapport aux pièces assemblées 10, 10' par la fixation 12. De préférence, après la mise en place des moyens 42, il subsiste un jeu entre la tête 16' de la fixation et la tête expansible 46 pour permettre un mouvement relatif entre le restant de la fixation et les moyens 42. Après la mise en place des moyens 42 pour retenir le restant de la fixation, le restant de la fixation est chassé des trous 18, 18' par tout moyen approprié.

Par chassé, on entend que le restant de la fixation n'est pas tiré mais poussé. Contrairement à l'art antérieur, le restant de la fixation ne vient pas endommager un élément proche, comme une couche acoustiquement résistive car il est retenu par la tête expansible 46 des moyens 42.

Avantageusement, le dispositif pour chasser le restant de la fixation comprend, en plus des moyens 42, une masselotte 60 qui à la manière d'un chasse goupille, permet de chasser le restant de la fixation des trous 18, 18'.

Selon un mode de réalisation, la masselotte 60 comprend deux sections étagées, une section inférieure 64, circulaire, avec un diamètre inférieur ou égal à celui des trous 18, 18' de manière à pouvoir y pénétrer et une face inférieure 66 susceptible d'être en contact avec le restant de la fixation, une section supérieure 68, supérieure à celle des trous 18, 18' avec une face supérieure 70 contre laquelle l'opérateur peut frapper à l'aide d'un outil comme un marteau ou un maillet.

De préférence, la face inférieure 66 a un profil complémentaire à celui du restant de la fixation. Ainsi, la face inférieure 66 a une forme conique comme le foret 36.

De préférence, la face inférieure de la section supérieure 68 comprend un revêtement 72 en un matériau adapté pour amortir les chocs et limiter les risques de dégradations de l'élément assemblé 10. Selon un mode de réalisation, le revêtement 72 est en élastomère.

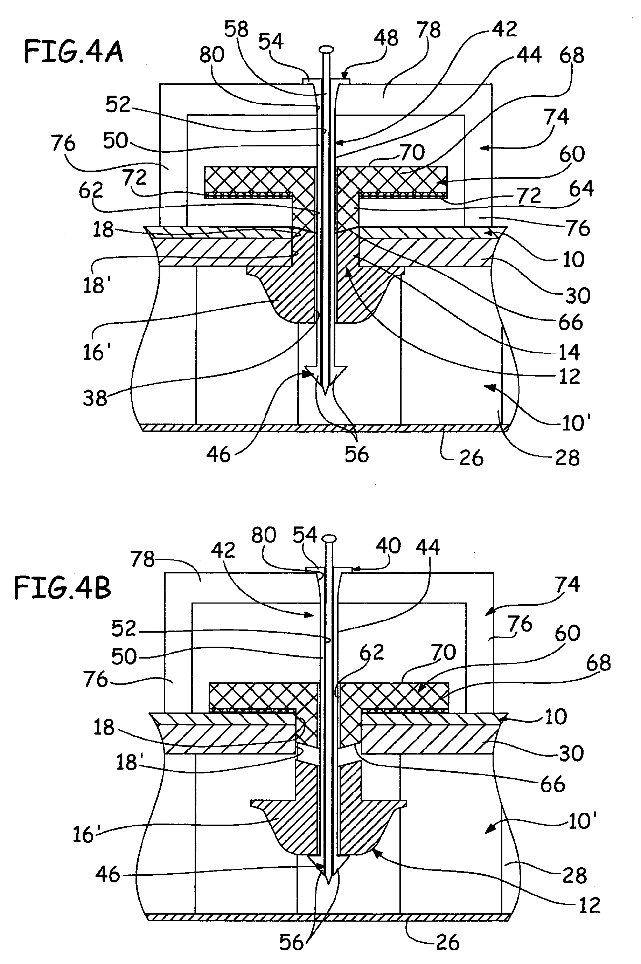

Selon une première variante illustrée sur les figures 4A et 4B, la masselotte 60 est coulissante par rapport aux moyens 42 et comprend un trou longitudinal 62 dans lequel peuvent coulisser les moyens 42 pour retenir le restant de la fixation.

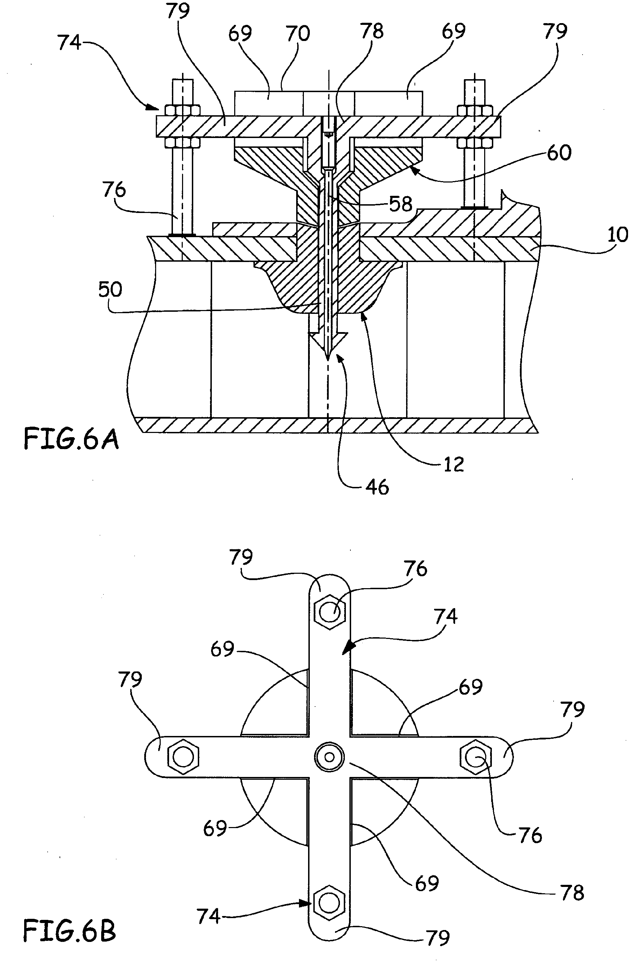

En complément, le dispositif pour chasser le restant de la fixation comprend, en plus des moyens 42 et de la masselotte 60, un support 74 qui assure le maintien des moyens 42 pour retenir le restant de la fixation, comme illustré sur les figure 4A, 4B, 6A et 6B.

Selon un mode de réalisation illustré sur les figures 4A et 4B, le support 74 comprend des pieds 76 susceptibles de prendre appui contre un référentiel et notamment les pièces assemblées 10, 10' et une partie centrale 78 avec un orifice 80 dont le diamètre est sensiblement égal à celui de l'aiguille 50, la tête de maintien 48 venant en appui contre la face supérieure de la partie centrale 78.

Les pieds 76 et la partie centrale 78 du support 74 ont des formes adaptées pour permettre de frapper sur la face supérieure 70 de la masselotte 60 avec un outil.

Avantageusement, le dispositif pour chasser le restant de la fixation comprend des moyens pour ajuster le positionnement de l'aiguille 50 par rapport au support 74 et donc le jeu E entre la tête 16' du restant du rivet et la tête expansible 46.

Selon un mode de réalisation, il est possible d'intercaler une ou plusieurs rondelles avec des épaisseurs adaptées entre la tête de maintien 48 et la partie centrale 78. En variante, on pourrait prévoir un pas de vis au niveau de la surface extérieure de l'aiguille 50 susceptible de coopérer avec un taraudage prévu au niveau de l'orifice 80 du support. Toutefois, d'autres solutions techniques pourraient être envisagées pour assurer le positionnement de l'aiguille 50 par rapport au support 74.

L'utilisation de cette variante du dispositif de l'invention est relativement simple. Après le retrait de la tête 16 de la fixation et le perçage du trou 38, l'utilisateur positionne le support 74 et introduit l'aiguille 50 dans le trou 38. En suivant, il introduit la tige 58 dans l'aiguille 50 de manière à ce que la tête expansible 46 soit à l'état expansé. Si nécessaire, il ajuste la position de l'aiguille 50 par rapport au support 74 de manière à prévoir un jeu E supérieur ou égal à la somme des hauteurs des trous 18, 18'. La surface extérieure de l'aiguille 50 peut être graduée pour faciliter ce positionnement.

En suivant, l'utilisateur frappe la face supérieure 70 de la masselotte 60, avec un outil, pour chasser le restant de la fixation.

Lors de cette action, la masselotte 60 chasse le restant de la fixation qui est retenu par la tête expansible 46 comme illustré sur la figure 4B. En suivant, l'utilisateur retire la tige 58. La tête expansible 46 se rétracte ce qui autorise son retrait de l'orifice 38 et libère l'aiguille 50 du restant de la fixation.

En suivant, le trou laissé par la fixation est rebouché en utilisant une mousse expansible qui durcit de manière à rigidifier le panneau et à immobiliser le restant de la fixation dans la structure alvéolaire afin de limiter l'apparition de vibrations.

Selon un autre mode de réalisation proche illustré sur les figures 6A et 6B, l'aiguille 50 et la partie centrale 78 du support 74 sont réalisées d'un seul tenant. La partie centrale comprend au moins deux bras 79, de préférence trois, qui comprennent à chaque extrémité des pieds 76 mobiles par rapport aux bras 79 pour pouvoir ajuster la hauteur du support 74 et le jeu E.

Les pieds 76 se présentent chacun sous la forme d'une tige dont au moins une partie est filetée. Ainsi, il est possible d'ajuster la position de chaque pied, indépendamment les uns des autres. Cette configuration permet d'adapter le support à des surfaces non coplanaires.

Avantageusement, chaque pied 76 comprend un tampon au niveau de son extrémité en contact avec les pièces afin d'éviter de les marquer.

Selon ce mode de réalisation, la masselotte 60 comprend une partie supérieure 68 avec des fentes 69 dans chacune desquelles se loge un bras 79. La hauteur de la masselotte 60 et celle des fentes 69 sont telles que les bras 79 sont toujours logés dans les fentes 69 et la face supérieure 70 de la masselotte 60 est toujours au-dessus du support 74 même lorsque la masselotte est dans sa position la plus basse par rapport audit support. Cette configuration permet de rendre toujours accessible la face supérieure de la masselotte.

Le fonctionnement du dispositif illustré sur les figures 6A et 6B est sensiblement identique à celui illustré sur les figures 4A et 4B.

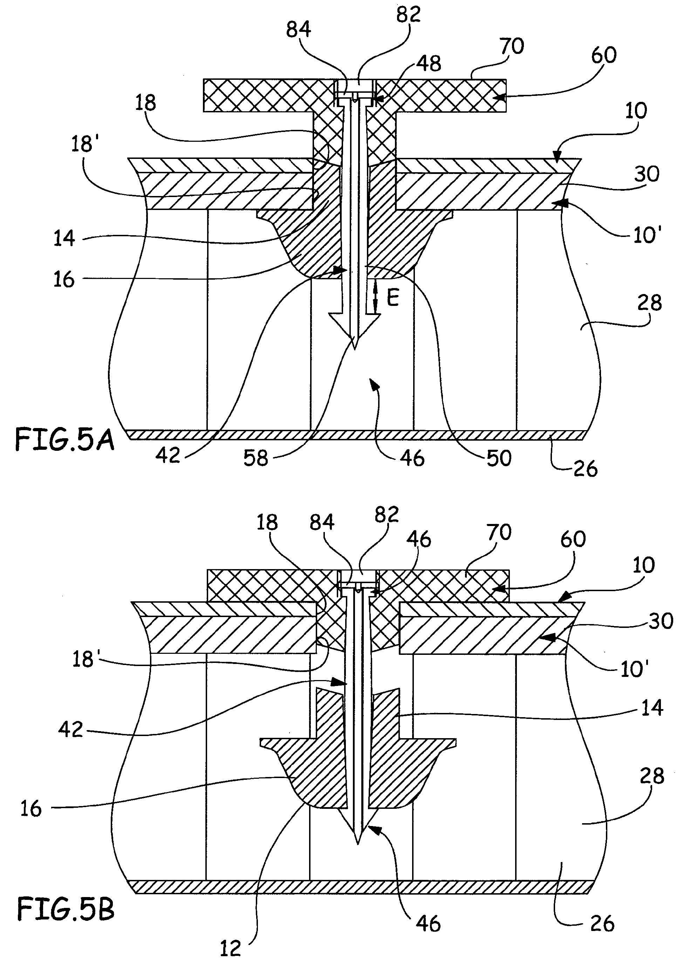

Selon une autre variante de l'invention illustrée sur les figures 5A et 5B, le dispositif pour chasser le restant de la fixation comprend des moyens de liaison entre la masselotte 60 et les moyens 42 pour retenir le restant de la fixation. Ainsi, les moyens 42 sont reliés à la masselotte 60 de manière à être immobilisés par rapport à ladite masselotte 60.

Avantageusement, la liaison entre les moyens 42 et la masselotte permet d'ajuster le positionnement entre ces deux éléments et donc le jeu E entre la tête 16' du restant du rivet et la tête expansible 46.

Selon un mode de réalisation, le trou longitudinal 62 de la masselotte 60 comprend un lamage 82 dont le diamètre est supérieur à celui du reste du trou, avec un taraudage. La tête de maintien 48 a un diamètre extérieur supérieur à celui du trou 62 et inférieur à celui du lamage 82. En complément, la tige 58 comprend une tête 84 dont le diamètre extérieur a un diamètre ajusté à celui du lamage 82 avec un filetage susceptible de coopérer avec le taraudage du lamage 82. Selon cette variante, il est possible d'ajuster le jeu E en intercalant ou non une ou plusieurs rondelles entre le fond du lamage 82 et la tête de maintien 48.

Selon cette variante, le jeu E n'est pas nécessairement supérieur ou égal à la somme des hauteurs des trous 18, 18'. Il pourrait être inférieur.

L'utilisation de cette variante du dispositif de l'invention est relativement simple. Après le retrait de la tête 16 de la fixation et le perçage du trou 38, l'utilisateur introduit l'aiguille 50 dans le trou 62 de la masselotte 60 et le trou 38 traversant la fixation. En suivant, il introduit la tige 58 dans l'aiguille 50 de manière à ce que la tête expansible 46 soit à l'état expansé. Si nécessaire, il a pu intercaler des rondelles entre la tête de maintien 48 et la masselotte 60. Pour maintenir ce réglage, il visse la tête 84 de la tige 58 par exemple en utilisant un tournevis, la tête 84 comprenant une empreinte adéquate pour être manoeuvrée par le tournevis.

En suivant, l'utilisateur frappe la face supérieure 70 de la masselotte 60, avec un outil, pour chasser le restant de la fixation.

Lors de cette action, la masselotte 60 chasse le restant de la fixation qui est retenu par la tête expansible 46 comme illustré sur la figure 5B. En suivant, l'utilisateur retire la tige 58. La tête expansible 46 se rétracte ce qui autorise son retrait de l'orifice 38 et libère l'aiguille du restant de la fixation.

En suivant, le trou laissé par la fixation est rebouché en utilisant une mousse expansible qui durcit de manière à rigidifier le panneau et à immobiliser le restant de la fixation dans la structure alvéolaire afin de limiter l'apparition de vibrations.

## Revendications

1. Procédé de destruction d'une fixation aveugle (12) assurant la liaison entre au moins deux pièces (10, 10'), ladite fixation aveugle (12) comprenant un corps (14) se logeant dans des trous (18, 18') prévus dans les pièces assemblées (10, 10') avec à chaque extrémité deux têtes (16, 16') avec des sections supérieures à celles des trous (18, 18'), ledit procédé comprenant l'étape consistant à retirer la tête (16) accessible de la fixation et étant **caractérisé en ce qu'**il consiste ensuite :
- à réaliser un trou (38) traversant la fixation;
- à mettre en place dans le trou (38) des moyens (42) pour retenir le restant de la fixation comportant un corps (44) longiligne dont le diamètre est inférieur ou égal à celui du trou (38) avec à une première extrémité une tête expansible (46), lesdits moyens (42) pour retenir le restant de la fixation étant immobilisés ou ayant un mouvement limité par rapport aux pièces assemblées (10, 10');
- et à chasser des trous (18, 18') desdites pièces assemblées ledit restant de la fixation.

2. Procédé selon la revendication 1, **caractérisé en ce qu'il** consiste à prévoir un jeu (E) entre la fixation et la tête expansible (46) lors de la mise en place des moyens (42) pour retenir le restant de la fixation.

3. Procédé selon la revendication 1 ou 2, **caractérisé en ce qu'il** consiste à utiliser pour chasser le restant de la fixation une masselotte (60).

4. Procédé selon la revendication 3, **caractérisé en ce qu'il** consiste à utiliser un support (74) prenant appui contre un référentiel et maintenant les moyens (42) pour retenir le restant de la fixation, et **en ce que** la masselotte (60) est coulissante par rapport aux moyens (42) pour retenir le restant de la fixation.

5. Procédé selon la revendication 3, **caractérisé en ce qu'**il consiste à prévoir une liaison entre la masselotte (60) et les moyens (42) pour retenir le restant de la fixation permettant de les immobiliser l'un par rapport à l'autre.

6. Dispositif permettant de retenir une partie d'une fixation aveugle (12) lors de la mise en oeuvre du procédé selon l'une quelconque des revendications précédentes, **caractérisé en ce qu'**il comprend une masselotte (60) pour frapper un restant de la fixation et des moyens (42) pour retenir ledit restant de la fixation comportant un corps (44) longiligne dont le diamètre est inférieur ou égal à celui d'un trou (38) traversant la fixation, avec à une première extrémité une tête expansible (46), lesdits moyens (42) pour retenir le restant de la fixation étant adaptés à être immobilisés ou à avoir un mouvement limité par rapport aux pièces assemblées (10, 10').

7. Dispositif selon la revendication 6, **caractérisé en ce qu'il** comprend un support (74) prenant appui contre un référentiel et maintenant les moyens (42) pour retenir le restant de la fixation.

8. Dispositif selon la revendication 7, **caractérisé en ce que** la masselotte (60) comprend un trou longitudinal (62) pour coulisser par rapport aux moyens (42) pour retenir le restant de la fixation.

9. Dispositif selon la revendication 6, **caractérisé en ce qu'il** comprend une liaison entre la masselotte (60) et les moyens (42) pour retenir le restant de la fixation permettant de les immobiliser l'un par rapport à l'autre.

10. Dispositif selon l'une quelconque des revendications 6 à 9, **caractérisé en ce que** la masselotte (60) comprend deux sections étagées, une section inférieure (64) susceptible de pénétrer dans les trous (18, 18') desdites pièces assemblées avec une face inférieure (66) susceptible d'être en contact avec le restant de la fixation ainsi qu'une section supérieure (68) avec une face supérieure (70) contre laquelle on peut frapper à l'aide d'un outil.

11. Dispositif selon la revendication 10, **caractérisé en ce que** la face inférieure de la section supérieure (68) de la masselotte (60) comprend un revêtement (72) en un matériau adapté pour amortir les chocs

12. Dispositif selon l'une quelconque des revendications 6 à 11, **caractérisé en ce qu'il** comprend des moyens pour ajuster le jeu (E) entre la tête expansible (46) et la fixation (12).

## Patentansprüche

1. Verfahren zur Zerstörung einer Blindbefestigung (12), die die Verbindung zwischen wenigstens zwei Teilen (10, 10') gewährleistet, wobei die Blindbefestigung (12) einen Körper (14) aufweist, der sich in Löchern (18, 18') befindet, die in den verbundenen Teilen (10, 10') vorgesehen sind, mit zwei Köpfen (16, 16') an jedem Ende mit Querschnitten, die größer als dzejenige der Löcher (18, 18') sind, wobei das Verfahren einen Verfahrensschritt aufweist, bei dem der zugängliche Kopf (16) der Befestigung entfernt wird, und **dadurch gekennzeichnet ist, dass** es die nachfolgenden Verfahrensschritte umfasst:
- Ausbilden eines die Befestigung durchquerenden Loches (38);
- in das Loch (38) Einbringen von Mitteln (42) zur Aufnahme des Restes der Befestigung, die einen langgestreckten Körper (44) aufweisen, dessen Durchmesser kleiner gleich demjenigen des Loches (38) ist, mit einem erweiterbaren Kopf (46) an einem ersten Ende, wobei die Mittel (42) zur Aufnahme des Restes der Befestigung ruhiggestellt sind oder ein begrenztes Spiel bezüglich der verbundenen Teile (10, 10') aufweisen;
- und Austreiben des Restes der Befestigung aus den Löchern (18, 18') der verbundenen Teile.

2. Verfahren nach Anspruch 1, **dadurch gekennzeichnet, dass** dieses darin besteht, beim Einbringen der Mittel (42) zur Aufnahme des Restes der Befestigung ein Spiel (E) zwischen der Befestigung und dem erweiterbaren Kopf (46) vorzusehen

3. Verfahren nach Anspruch 1 oder 2, **dadurch gekennzeichnet, dass** dieses darin besteht, zum Austreiben des Restes der Befestigung einen Stößel (60) zu verwenden.

4. Verfahren nach Anspruch 3, **dadurch gekennzeichnet, dass** dieses darin besteht, eine Halterung (74) zu verwenden, die sich auf einen Bezugskörper stützt und die die Mittel (42) zur Aufnahme des Restes der Befestigung hält, und dass der Stößel (60) bezüglich der Mittel (42) zur Aufnahme des Restes der Befestigung gleitend ausgebildet sind.

5. Verfahren nach Anspruch 3, **dadurch gekennzeichnet, dass** dieses darin besteht, eine Verbindung zwischen dem Stößel (60) und den Mitteln (42) zur Aufnahme des Restes der Befestigung vorzusehen, die es gestattet, diese untereinander ruhigzustellen.

6. Vorrichtung, die es gestattet, einen Teil einer Blindbefestigung (12) bei der Ausführung des Verfahrens nach einem der vorhergehenden Ansprüche aufzunehmen, **dadurch gekennzeichnet, dass** diese einen Stößel (60) aufweist, um einen Rest der Befestigung zu stoßen, und Mittel (42) zur Aufnahme des Restes der Befestigung, die einen langgestreckten Körper (44) aufweisen, dessen Durchmesser kleiner gleich demjenigen eines sich durch die Befestigung hindurch erstreckenden Loches (38) ist, mit einem erweiterbaren (46) Kopf an einem ersten Ende, wobei die Mittel (42) zur Aufnahme des Restes der Befestigung dazu eingerichtet sind, ruhiggestellt zu werden oder über ein begrenztes Spiel bezüglich der verbundenen Teile (10, 10') zu verfügen.

7. Vorrichtung nach Anspruch 6, **dadurch gekennzeichnet, dass** diese eine Halterung (74) aufweist, die sich auf einen Bezugskörper stützt und die die Mittel (42) zur Aufnahme des Restes der Befestigung hält.

8. Vorrichtung nach Anspruch 7, **dadurch gekennzeichnet, dass** der Stößel (60) ein sich in Längsrichtung erstreckendes Loch (62) aufweist, um bezüglich der Mittel (42) zur Aufnahme des Restes der Befestigung zu gleiten.

9. Vorrichtung nach Anspruch 6, **dadurch gekennzeichnet, dass** diese eine Verbindung zwischen dem Stößel (60) und den Mitteln (42) zur Aufnahme des Restes der Befestigung aufweist, die es gestattet, diese untereinander ruhigzustellen.

10. Vorrichtung nach einem der Ansprüche 6 bis 9, **dadurch gekennzeichnet, dass** der Stößel (60) zwei übereinander liegenden Abschnitte aufweist, einen unteren Abschnitt (64), der dazu eingerichtet ist, in die Löcher (18, 18') der verbundenen Teile einzudringen, mit einer unteren Seite (66) die dazu eingerichtet ist, in Kontakt mit dem Rest der Befestigung zu treten, ebenso wie einen oberen Abschnitt (68) mit einer oberen Seite (70), auf die mit Hilfe eines Werkzeuges geschlagen werden kann.

11. Vorrichtung nach Anspruch 10, **dadurch gekennzeichnet, dass** die Unterseite des oberen Abschnitts (68) des Stößels (60) eine Beschichtung (72) aus einem zur Aufnahme von Schocks geeigneten Material aufweist.

12. Vorrichtung nach einem der Ansprüche 6 bis 11, **dadurch gekennzeichnet, dass** es Mittel aufweist, um das Spiel (E) zwischen dem erweiterbaren Kopf (46) und der Befestigung (12) einzustellen.

## Claims

1. A method for destroying a blind fastener (12) that joins two parts (10, 10'), said blind fastener (12) comprising a body (14) situated in the holes (18. 18') provided in the joined parts (10, 10'), with head (16, 16') at each end thereof, portions of which protrude above the level of the holes (18, 18'), said method comprising the step of withdrawing the accessible head (16) of the fastener, and being **characterized in that** it includes the following step of:
- creating a hole (38) through the fastener,
- inserting means (42) for restraining the remainder of the fastener in the hole (38), which means consist of an elongated body (44) having a diameter smaller than or equal to that of the hole (38) and an expandable head (46) at one end thereof, said means (42) for restraining the remainder of the fastener being immobilised or capable of only limited movement relative to the joined parts (10, 10'),
- and expelling said remainder of the fastener from the holes (18, 18') of said joined parts.

2. The method according to claim 1, **characterised in that** it consists of ensuring a free play (E) between the fastener and the expandable head (46) when positioning means (42) for holding the remainder of the fastener in place.

3. The method according to claim 1 or 2, **characterised in that** it consists of using a punch (60) to expel the remainder of the fastener.

4. The method according to claim 3, **characterised in that** it consists of using a bearing element (74) that is braced against a reference element and supports the means (42) for holding the remainder of the fastener in place, and that the punch (60) is slidable relative to the means (42) for holding the remainder of the fastener in place.

5. The method according to claim 3, **characterised in that** it consists of providing a connection between punch (60) and the means (42) for holding the remainder of the fastener in place, immobilising them relative to one another.

6. A device for holding a part of a blind fastener (12) in place while the method according to any of the preceding claims is implemented, **characterised in that** it includes a punch (60) for striking a remainder of the fastener and means (42) for holding said remainder of the fastener in place comprising an elongated body (44) having a diameter smaller than or equal to that of the hole (38) that passes through the fastener, with an expandable head (46) at one end thereof, said means (42) for holding the remainder of the fastener in place being adapted to be immobilised or to have a limited movement relative to the joined parts (10,10').

7. The device according to claim 6, **characterised in that** it comprises a bearing element (74) that is braced against a reference element and supports means (42) for holding the remainder of the fastener in place.

8. The device according to claim 7, **characterised in that** the punch (60) is furnished with a longitudinal hole (62) that enables it to slide relative to means (42) for holding the remainder of the fastener in place.

9. The device according to claim 6, **characterised in that** it comprises a connection between the punch (60) and the means (42) for holding the remainder of the fastener in place so that they can be immobilised relative to one another.

10. The device according to any of claims 6 to 9, **characterised in that** the punch (60) comprises two tiered sections, a lower section (64) that is able to pass through holes (18,18') of said joined parts and with a lower face (66) that is able to contact the remainder of the fastener, and an upper section (68) having an upper face (70), which can be struck with a tool.

11. The device according to claim 10, **characterised in that** the lower face of the upper section (68) of the punch (60) is furnished with a coating (72) of a material suitable for attenuating impacts.

12. The device according to any of claims 6 to 11, **characterised in that** it comprises means for adjusting the free play (E) between the expandable head (46) and the fastener (12).
